# FASCICULE DE BREVET EUROPEEN

(11) **EP 0 414 589 B1**
(45) Date de publication et mention de la délivrance du brevet: **27.10.1993**
(21) Numéro de dépôt: 90402270.4
(22) Date de dépôt: 08.08.1990
(51) Int. Cl.: F16L 39/00, F16L 13/10, F16L 59/14

(54) **Système d'enceinte secondaire de retenue d'eau**
Doppelwandsystem für einen Wasserbehälter
Double-wall system for a water containment

(30) Priorité: 21.08.1989 US 396222
(43) Date de publication de la demande: 27.02.1991
(73) Titulaire: SA ETEX, F-78540 Vernouillet (FR)
(72) Inventeur: Stiskin, Hal (NMI), California 91326 (US); Jones, Thomas A., California 91351 (US); Hogan, Joseph Mickael, California 91351 (US)
(74) Mandataire: Armengaud Ainé, Alain

(56) Documents cités:
- CH-A- 582 327
- DE-U- 1 873 419
- DE-U- 7 012 722
- FR-A- 392 729
- US-A- 2 958 546
- US-A- 3 517 702
- US-A- 3 802 456
- US-A- 4 786 088

## Description

La présente invention concerne les systèmes d'enceinte secondaire de retenue destinés à empêcher la fuite des fluides véhiculés par une canalisation primaire ; et elle se réfère plus particulièrement à un système d'enceinte secondaire de retenue, adapté à la protection d'un réseau primaire de tubes et de raccords.

La protection de l'environnement contre la pollution constitue aujourd'hui un problème majeur et fait l'objet d'une surveillance croissante tant de la part de l'industrie que des gouvernements aussi bien dans le domaine de l'épuration des rejets existants que dans celui de la prévention d'une nouvelle forme de contamination par les fuites provenant (ou qui pourraient provenir à terme) des canalisations primaires. Les conséquences de ces rejets peuvent être graves et nécessiter des frais importants de dépollution ; ceci souligne, si besoin est, l'importance tant écologique qu'économique de la prévention des fuites de matériaux dangereux pour l'environnement, qu'il s'agisse de produits chimiques ou pétroliers, mais également des eaux usées.

Aux Etats-Unis, les règlements gourvernementaux exigent déjà des enceintes secondaires de retenue sur de nombreuses installations du type stockage de produits chimiques, et exigeront dans les toutes prochaines années des dispositifs similaires sur de nombreux systèmes en fonctionnement qui fuient déjà ou sont susceptibles de fuire à terme.

Il existe dès lors un important besoin de disposer d'un système d'enceinte secondaire qui soit pratique et économique.

Plusieurs approches différentes ont été suggérées pour résoudre ce problème, une des approches les plus récentes étant décrite dans le brevet US - A - 786 088 sous la forme d'un double assemblage de tubes thermoplastiques comprenant un tube enveloppe et un tube porteur assemblés par des raccords et des jonctions relativement complexes, certains de ceux-ci étant fendus pour être soudés ensemble autour d'un raccord primaire. D'autres approches d'enceintes secondaires de retenue ou de systèmes à double canalisations sont citées dans l'état de la technique de la présente demande de brevet.

C'est ainsi par exemple qu'un système à double canalisation est présenté dans le brevet US - A - 4 374 596, qui décrit un connecteur de conduit électrique avec des éléments tubulaires et des raccords tubulaires fendus longitudinalement et qui peuvent être assemblés par clipsage, ainsi que dans le brevet US - A - 3 572 395 qui montre un raccord coudé fendu pratiquement semblable. D'autres systèmes et éléments tubulaires d'enceinte secondaire, représentatif de la technique antérieure sont illustrés dans les brevets US-A-3 721 270, US-A-3 802 456, US-A-4 422 675 et US-A-4 673 926 qui sont tous concernés par la collecte des fuites provenant de tubes et de raccords primaires. Le brevet US-A-4 673 926 illustre une caractéristique auxiliaire importante de ces systèmes, à savoir la présence de moyens de détection et de signalisation des fuites dans les systèmes d'enceinte secondaire, de telle façon que l'on puisse prendre les mesures de correction requises pour éliminer les fuites de la canalisation primaire vers l'enceinte secondaire.

US-A-2 958 546 décrit une enceinte de protection qui est réalisée sous la forme de conduites entourant les tubes à protéger, cette enceinte de protection étant constituée de sections qui sont assemblées par des raccords afin d'éliminer toute fuite.

Encore une autre approche, pratiquée par Harrington Industrial Plastics, Los Angeles - Ca. et ailleurs, a été d'utiliser des tubes et des raccords thermoplastiques standard, en un matériau tel que le chlorure de polyvinyle (PVC), avec des tubes d'enceinte secondaire surdimensionnés enfilés sur les tubes primaires et assemblés au-dessus des raccords conventionnels des tubes primaires par des raccords de tubage secondaire surdimensionnés qui ont été coupés, habituellement par sciage, en deux parties qui doivent ensuite être ré-assemblées, à la façon de coquilles, autour du raccord des tubes primaires. Ces raccords sont fixés l'un à l'autre, par exemple par soudage à chaud des bords sciés et ils sont ensuite collés aux tubes secondaires, habituellement par une colle étanche. Des pièces d'écartement en courbe avec des doigts radiaux ont été prévues en différentes tailles pour maintenir les systèmes de tubes en position relative co-axiale.

Malgré tous ces efforts antérieurs pour procurer des systèmes d'enceinte secondaire qui soient efficaces, pratiques et d'un prix raisonnable, il n'existe encore aucun système qui soit entièrement satisfaisant. Nombre d'entre eux souffrent d'une complexité exagérée et d'un coût excessif à fabriquer, assemblés ou installés, et la plupart ne sont pas aptes à être appliqués à un système primaire existant, pour constituer une enceinte secondaire efficace en réhabilitation.

La présente invention a comme objectif premier de proposer un système d'enceinte secondaire de retenue qui réponde à ce besoin, qui soit relativement simple et peu coûteux à la construction, qui puisse être mis en place rapidement et aisément sans nécessiter d'équipement complexe, aussi bien dans le cadre d'une installation neuve que d'une canalisation à réhabiliter, et qui puisse également faire l'objet d'un contrôle intégral pendant sa mise en oeuvre. En outre, avec le système de la présente invention, il est possible de situer aisément la localisation des fuites dans la canalisation primaire, et d'effectuer les réparations tant dans la canalisation primaire que dans l'enceinte secondaire.

A cet effet, la présente invention concerne un système d'enceinte secondaire de retenue d'eau, destiné en particulier à empêcher la fuite des fluides véhiculés par une canalisation primaire qui comprend :
- des tubes de canalisation primaire reliés au moins par un raccord primaire ;
- des tubes d'enceinte secondaire divisés longitudinalement en une pluralité d'éléments tubulaires allongés, disposés de part et d'autre d'un ou de plusieurs plans de séparations, assemblés autour des tubes de canalisation primaire, et reliés par un système de raccord secondaire constitué de deux parties de raccord conçues de façon à être disposées autour du raccord primaire et accolées l'une à l'autre par assemblage bord à bord en définissant des emboîtures tubulaires recevant les extrémités des tubes d'enceinte secondaire ;
- des passages pour matériau d'étanchéité prévus entre les surfaces de contact des deux parties du raccord, dans ledit raccord assemblé, qui sont remplis d'un matériau d'étanchéité adhésif pour fixer et sceller l'une à l'autre lesdites parties du raccord et,
- une gorge d'étanchéité prévue dans la paroi intérieure de chaque emboîture, cette gorge débouchant dans des passages d'étanchéité encerclant l'extrémité d'un tube d'enceinte secondaire et qui sont remplis dudit matériau d'étanchéité adhésif de manière que ce dernier forme un joint continu inimterrompu entourant totalement l'espace intérieur ménagé dans le système de raccord complétant ainsi l'assemblage raccord-tube.

Pour l'assemblage, les parties desdits raccords d'enceinte secondaire sont fixées l'une à l'autre autour des tubes d'enceinte secondaire, mis en place par dessus le système de canalisation primaire, et un matériau d'étanchéité adhésif est injecté dans les deux groupes de passages pour former un joint étanche aux fluides entourant complètement l'intérieur du raccord et l'extérieur de l'extrémité emboîtée du tube, et ils sont maintenus ensemble jusqu'à ce que le matériau d'étanchéité adhésif soit solidifié. Afin d'améliorer l'assemblage du raccord il est conseillé de prévoir de larges surfaces de contact sous forme de brides opposées en saillie latéralement des parties du raccord, et de serrer ces brides mécaniquement l'une contre l'autre au moyen de pinces qui peuvent être laissées en place au moins jusqu'à ce que le matériau d'étanchéité adhésif soit solidifié. L'injection du matériau d'étanchéité adhésif s'effectue au travers d'orifices espacés s'ouvrant sur les passages internes en des points choisis, à savoir dans les gorges des emboîtures à proximité de leurs intersections avec les passages des brides, de sorte que le matériau d'étanchéité s'écoule dans les deux groupes de passages à partir desdits orifices. Le matériau préféré pour la réalisation des raccords est transparent alors que le matériau d'étanchéité adhésif à une couleur contrastrée, blanc par exemple, pour permettre l'observation visuelle de l'écoulement dudit matériau d'étanchéité adhésif dans et le long des passages. Les surfaces coopérantes des différentes parties du raccord permettent l'alignement des passages de matières adhésive et forment des barrages pour retenir le matériau d'étanchéité adhésif à l'intérieur de ces passages. Des zones de trop plein sont prévues pour recueillir le dit matériau d'étanchéité adhésif en excès et réduire l'échappement de ce dernier hors du raccord.

De même, la présente invention utilise des tubes d'enceinte secondaire divisés longitudinalement qui sont constitués d'une pluralité d'éléments tubulaires allongés, de préférence deux, qui sons assemblés bord à bord et présentent des moyens de couplage interactifs sur leurs bords d'assemblage pour verrouiller les éléments l'un à l'autre, et des moyens définissant des passages d'étanchéité intérieurs s'étendant le long des bords d'assemblage, et remplis ultérieurement d'un matériau d'étanchéité adhésif pour étancher et coller les bords.

Dans une variante préférée pour les systèmes sous-pression, les moyens de jonction font appel à un dispositif à base de nervure et gorge.

Des languettes d'étanchéité sont ménagées sur les éléments tubulaires le long de leur ligne de séparation et en position de contact avec l'élément tubulaire opposé, et forment des passages internes d'étanchéité recouvrant les deux dispositifs de jonction. Un matériau d'étanchéité adhésif est injecté dans ces passages à partir d'orifices longitudinalement espacés de chaque côté, et qui non seulement remplit les passages pour l'assemblage des languettes des éléments tubulaires mais aussi s'écoule dans les éléments à nervure et gorge pour les fixer par collage et les étancher également. Les languettes sont empêchées de s'écarter des parois internes des éléments tubulaires par des nervures internes disposées le long des bords desdits éléments, ces nervures étant profilées et positionnées de sorte à presser les bords libres des languettes fermement contre les parois des éléments tubulaires lorsque ces éléments tubulaires sont verrouillés l'un à l'autre. Les éléments tubulaires utilisés sont également transparents pour autoriser l'observation visuelle des coulées du matériau d'étanchéité adhésif le long des passages et s'assurer de la réalisation complète de l'étanchéité de chaque joint.

Le procédé de l'invention comprend les opérations consistant à utiliser des composants d'enceinte secondaire de retenue, aussi bien des éléments de raccord que des éléments tubulaires, à les assembler autour des composants (raccord et tube) d'un système de canalisation primaire, à les fixer mécaniquement l'un à l'autre de façon temporaire, à injecter dans les éléments de raccord un matériau d'étanchéité adhésif pour former des joints étanches complets à l'intérieur du raccord et des éléments tubulaires, à observer l'achèvement de chaque joint à mesure que l'injection progresse, et à maintenir le couplage mécanique des éléments au moins jusqu'à ce que le matériau d'étanchéité se soit solidifié, de préférence pendant une certaine période de prise. En fait, avec des pinces peu coûteuse comme des clips en forme de C serrés sur les brides, les couplages mécaniques peuvent demeurer indéfiniment en guise de renforcement pour les joints collés.

D'autres aspects et avantages de l'invention apparaîtront dans la description qui suit, considérée en liaison avec les figures annexées parmi lesquelles :

**LA FIGURE 1** : est une vue fragmentaire en perspective des composants d'un système d'enceinte secondaire de retenue conforme à la présente invention, au cours de son installation par dessus les parties correspondantes d'un système de canalisation primaire, le raccord illustré étant un raccord en "T".

**LA FIGURE 2** : est une vue éclatée en perspective des composants de la Fig. 1, montrés dans une forme légèrement schématique, avec les éléments de l'enceinte secondaire séparés des éléments de la canalisation primaire.

**LA FIGURE 3** : est une vue fragmentaire en plan agrandie des composants de la Fig. 1.

**LA FIGURE 4** : est une autre vue fragmentaire en coupe transversale agrandie prise le long de la ligne 4 - 4 de la Fig. 3 dans la direction des flèches.

**LA FIGURE 5** : est une vue fragmentaire en coupe transversale agrandie prise le long de la ligne 5 - 5 de la Fig. 3 avec un élément de la canalisation primaire écorché pour la clarté de l'illustration.

**LA FIGURE 6** : est une autre vue fragmentaire en coupe transversale agrandie, prise le long de la ligne 6 - 6 de la Fig. 4.

**LA FIGURE 7** : est une vue analogue à celle de la Fig. 6, mais montrant un raccord coudé.

**LA FIGURE 8** : est une vue fragmentaire en perspective agrandie d'un tube d'enceinte secondaire en position d'assemblage avec un tube de la canalisation primaire, et avec un exemple d'une pièce d'écartement maintenant les deux tubes en position relative généralement coaxiale.

**LA FIGURE 9** : est une vue en coupe transversale agrandie prise le long de la ligne 9 - 9 de la Fig. 8.

**LA FIGURE 10** : est une vue éclatée en perspective agrandie du tube d'enceinte secondaire de la Fig. 8, avec les deux éléments tubulaires séparés.

**LA FIGURE 11** : est une vue fragmentaire en coupe transversale agrandie analogue à celle de la Fig. 9, mais montrant une autre variante de l'invention.

**LA FIGURE 12** : est une vue analogue à celle de la Fig. 11 montrant une autre variante de l'invention.

**LA FIGURE 13** : est une vue fragmentaire en élévation latérale, à une échelle réduite, d'un tube d'enceinte secondaire du type illustré sur la Fig. 12 s'étendant entre deux raccords de tube d'enceinte secondaire.

Comme représentée sur les figures annexées d'exemples non limitatifs, l'invention est mise en oeuvre à l'aide d'éléments d'un système d'enceinte secondaire de retenue, globalement désigné par le répère numérique 10, destiné à un système de canalisation primaire 11 qui comprend un raccord en "T" 12 reliant trois tubes primaires 13. Les éléments du système de canalisation primaire peuvent être de construction tout à fait conventionnelle et ne font nullement partie de la présente invention, de sorte qu'ils ne sont illustrés que de manière générale.

Les éléments de l'enceinte secondaire illustrée sont un raccord en "T" 14 tout d'abord pour entourer le accord en "T" 12 correspondant de la canalisation primaire et ensuite trois tubes secondaires 15 pour entourer les tubes primaires 13 correspondants. Bien que différents matériaux puissent être utilisés pour la fabrication des composants de l'enceinte secondaire retenue, les matériaux préférés sont les matières thermoplastiques et en particulier le PVC.

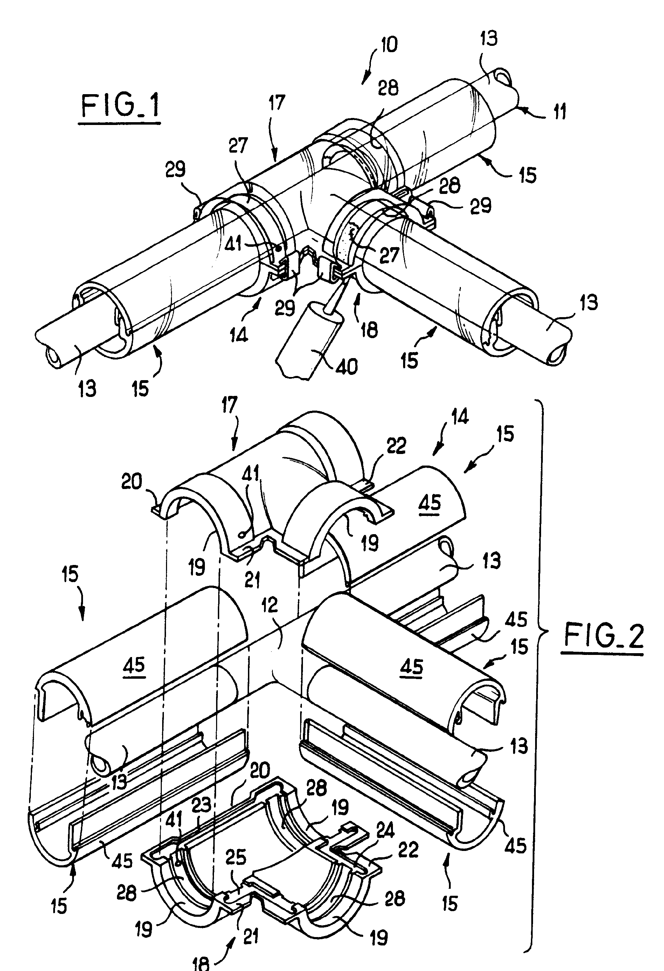

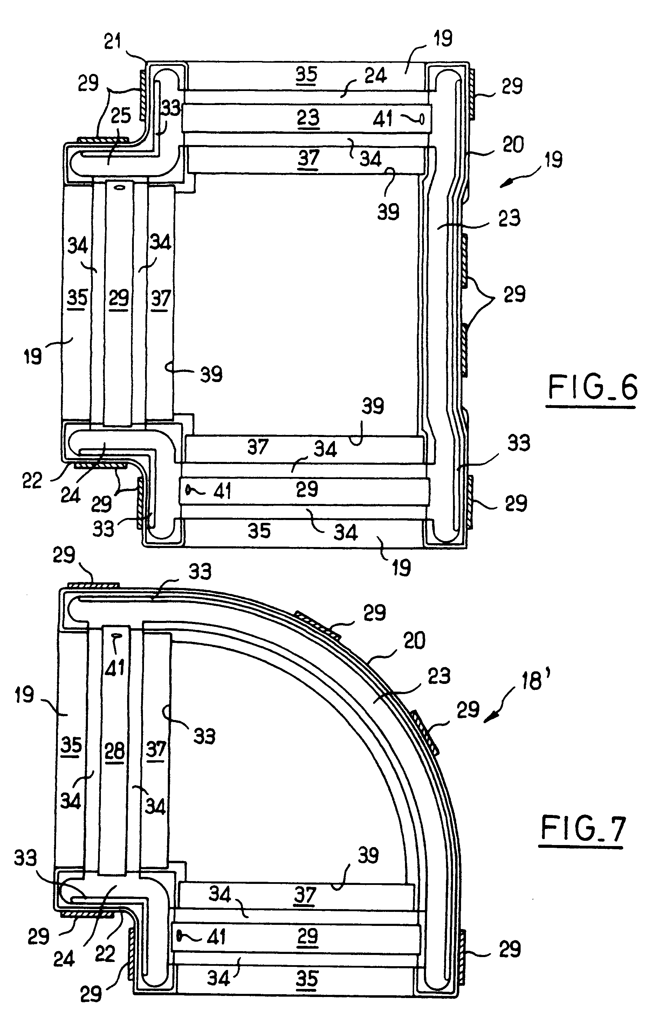

Le système représenté sur les figures 1 et 2 est un système d'enceinte secondaire de quatre pouces (107 mm) apte à être utilisé par dessus des systèmes de canalisation primaire plus petits. En plus d'une liaison de trois tubes du type représenté ici, le système de la présente invention peut être adpaté à tous les types de raccord de branchement habituellement rencontrés sur les canalisations, à savoir des raccords coudés comme représenté sur la figure 7, des manchons munis d'emboîtures alignées, des culottes et piquages, des réductions, des siphons, des purges, des tampons... Dans la description qui suit, la manière d'adapter l'invention à ces différents branchements apparaîtra clairement aux hommes du métier.

Comme cela est représenté sur la figure 2, la mise en oeuvre préférée du raccord d'enceinte secondaire 10 comprend deux parties de raccord 17 et 18, qui sont des pièces en thermoplastique moulé aptes à être disposées autour du raccord primaire 12 et accolées l'une à l'autre par assemblage bord à bord pour enfermer le raccord primaire et définir trois emboîtures tubulaires 19 surplombant les emboîtures tubulaires du raccord primaire. Bien que des raccords fendus pour tubes soient connus, comme par exemple dans le brevet US - A 4 786 088 ou dans le système Harrigton précité, ces raccords fendus pour tubes ne s'avèrent pas réellement pratiques et efficaces lors de la mise en oeuvre et nécessitent de plus de recourir au soudage à chaud, ou au soudage en bout, pour joindre les bords des pièces.

Conformément à un premier aspect de la présente invention, les parties 17 et 18 du raccord d'enceinte secondaire 14 sont pourvues de surfaces de contact relativement larges aux lignes de séparation du raccord, ici sur des brides en saillie latérale 20, 21 et 22 disposées sur les côtés opposés d'un plan central de séparation passant par les axes des trois emboîtures du raccord. Ces brides ont pour effet d'épaissir les bords de contact des deux parties du raccord, offrant des points de serrage aisément accessibles, et présentant, sur leurs faces de contact opposées, des rainures d'étanchéité 23, 24 et 25 qui sont enfermées entre les surfaces de contact, dans le raccord assemblé, pour former des passages d'étanchéité, et qui sont remplies d'un matériau d'étanchéité adhésif 27 (voir Fig. 1) destiné à fixer et sceller l'une à l'autre les parties du raccord.

De plus, chaque partie 17, 18 du raccord présente, dans la paroi intérieure de chaque demi-emboîture 19, et comme on peut voir clairement sur les Fig. 2 et 6, une gorge d'étanchéité 28 qui s'étend autour des deux demi-emboîtures entre les brides latérales. Ces gorges d'étanchéité s'ouvrent à leurs extrémités dans les rainures d'étanchéité 23, 24 et 25 ménagées dans les brides. Lorsque l'extrémité male d'un tube d'enceinte secondaire 15 est insérée dans l'une des emboîtures, les gorges 28 des demi-emboîtures sont alignées l'une avec l'autre et sont fermées, sur leur côté ouvert, par le tube, formant ainsi un passage pour le matériau d'étanchéité qui encercle l'extrémité du tube et qui communique avec les passages formés par les rainures entre les brides. Lorsqu'un tube 15 est inséré dans l'emboîture et que les passages autour de l'emboîture et entre les brides sont remplis d'un matériau d'étanchéité adhésif, ce dernier forme un joint continu ininterrompu entourant totalement l'espace intérieur ménagé dans le raccord 14, et achevant l'assemblage raccord-tube.

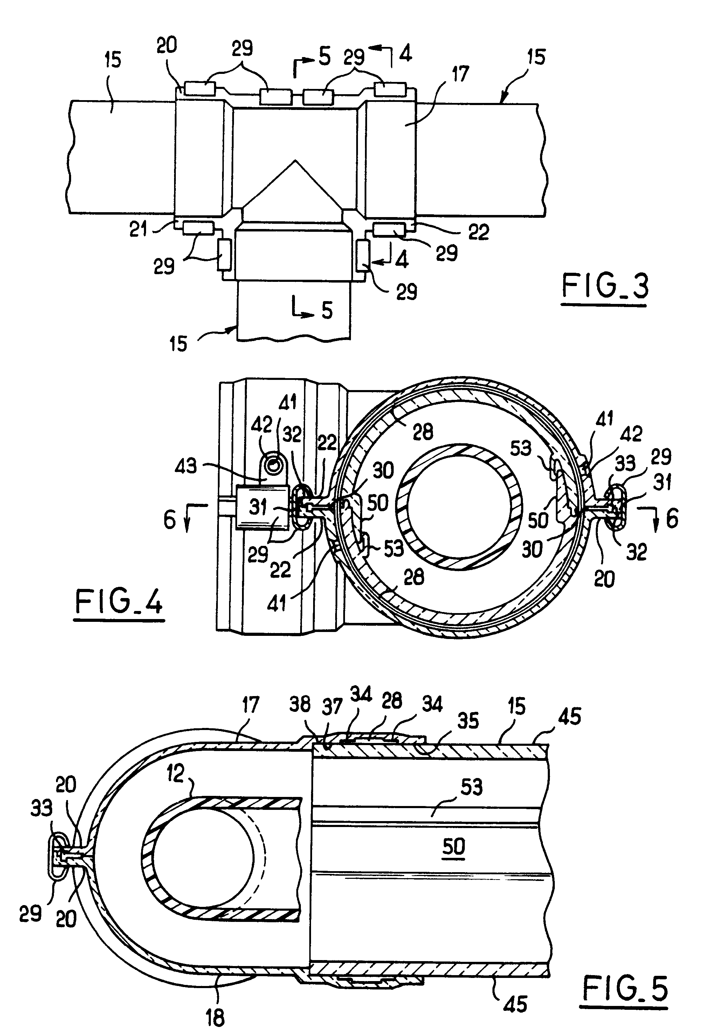

Différents moyens peuvent être utilisés pour fixer l'un dans l'autre les demi-raccords 17, 18 avant l'application du matériau d'étanchéité adhésif, mais le mode préférentiel de réalisation fait appel à un simple jeu de pinces métalliques 29 (Fig. 1, 3, 4 et 5) formées par des clips en forme de "C" en un métal relativement rigide, ayant des extrémités qui sont normalement écartées l'une de l'autre d'une distance légèrement inférieure à l'épaisseur combinée des deux brides en contact, pour assurer leur serrage. Après assemblage des brides, un clip peut être partiellement engagé sur les extrémités de ces dernières puis ensuite mis en place au moyen d'un outil approprié par exemple un marteau (non représenté). Comme on peut le voir sur les Fig. 1 et 3, un clip 29 est disposé sur chacune des extrémités de chaque bride 21, 22 et deux clips 29 supplémentaires sont disposés sur la partie centrale de la plus grande bride 20 le long du côté le plus allongé du raccord. Ainsi, les brides en vis à vis forment des surfaces de serrage complémentaires et offrent des surfaces de contact importantes. Des nervures externes (non représentées) peuvent être formées sur les brides pour compléter les surfaces de serrage et pour empêcher les pinces de glisser latéralement sur les brides.

Lorsque les brides sont serrées l'une contre l'autre, et comme on le voit dans les parties gauche de la Fig. 5 les surfaces de contact des brides 20, 21 et 22 ferment et assurent l'étanchéité des passages formés entre les brides. Comme représenté sur les Fig. 2 et 4 les rainures 23, 24 et 25 formant les passages, sont entourées par des surfaces planes opposées, sauf aux ouvertures d'entrée 30 dans les gorges 28 des emboîtures le long des bords extérieurs des brides. Il est prévu dans ces surfaces planes des éléments coopérants 31 et 32 à nervure et gorge se faisant face latéralement pour créer des surfaces complémentaires sur le raccord.

Comme on peut le voir sur la Fig. 4, l'élément inférieur porte une nervure rectangulaire 31 s'étendant vers le haut le long du bord extérieur de la bride de gauche 21 et une rainure rectangulaire 32 le long du bord extérieur de la bride de droite 20, et la partie supérieure du joint présente la configuration inverse, la rainure de gauche 32 recevant la nervure 31 et la nervure de droite 31 s'engageant vers le bas dans la nervure 32. Les côtés de ces éléments constituent des surfaces de positionnement se faisant face latéralement, et qui s'étendent le long des trois brides pour le positionnement optimum des deux parties du raccord.

Un volume de trop-plein est prévu le long des bords extérieurs des passages formés par les rainures 23, 24 et 25 pour réduire la tendance du matériau d'étanchéité adhésif à s'échapper entre les surfaces accolées autour des passages. Dans les passages à brides, le volume de trop-plein est formé par des canaux 33 relativement profonds et étroits le long des bords extérieurs des rainures, correspondant seulement à une petite partie de la largeur de la rainure, moins d'un quart dans le présent exemple. Ces canaux permettent à l'excédent de matériau d'étanchéité adhésif de déborder dans des "puits" profonds disposés le long des bords, en réduisant la tendance dudit matériau à s'infiltrer entre les brides.

Dans une variante, des volumes ou gorges 34 relativement étroites sont formées de part et d'autre des gorges centrales plus profondes 28, qui constituent les parties principales des passages d'étanchéité dans les emboîtures 19. Comme on peut le voir sur la Fig. 5, ces volumes permettent au matériau d'étanchéité adhésif de s'écouler hors des gorges principales 28 vers les extrémités opposées de l'emboîture. Celles-ci étant moins profondes que les gorges centrales, les écoulements primaires s'effectuent préférentiellement le long des dites gorges centrales. Les gorges de trop-plein moins profondes sont délimitées par des parois 35 et 37 de l'emboîture qui s'appliquent hermétiquement sur le tube 15, qui se trouve en butée contre un épaulement intérieur 38 (Fig. 5) ménagé à l'extrémité intérieure de l'emboîture. Avec des pièces correctement dimensionnées et fermées, les fuites de matériau d'étanchéité adhésif hors de ces gorges sont totalement marginales.

On comprendra que certaines dimensions varieront avec les applications particulières les matériaux utilisées, et les tolérances autorisées. A titre de simple exemple d'une mise en oeuvre préférenteille, le matériau d'étanchéité adhésif utilisé est une colle pour tube plastique vendu comme "719 pour PVC" sous le nom commercial "Weld-On" par Industrial Polychemical Service ("IPS"), Gardena, Californie. Ce produit est fourni sous la forme d'un fluide blanc thixotropique (pâteux) lourd. On autre matériau d'étanchéité adhésif adéquat qui a l'avantage d'une temps de prise plus court est une colle thermodurcissable, telle que celle qui est vendue par IPS sous le nom de "Weld-On" 10. Avec ces colles les dimensions appropriées de l'épaisseur totale des passages principaux formés par les rainures 23, 24 et 25 sont de l'ordre d'environ .030 pouce ou 0,76 mm (.015 pouce ou 0,38mm dans chaque bride), et la profondeur totale adéquate pour les canaux 33 est d'environ .050 pouce ou 1,27 mm (.025 pouce ou 0,63 mm dans chaque bride). L'épaisseur des gorges principales 28 dans les emboîtures 19 peut être de .050 pouce (1,27 mm) et de l'ordre d'environ .030 pouce (0,76 mm) avec les parties de trop plein moins profondes 34. Bien entendu les dimensions peuvent varier suivant les circonstances, et il est recommandé de recalculer les dimensions optimales pour chaque nouvelle application.

L'injection du matériau d'étanchéité adhésif dans les deux groupes de passages est effectuée au moyen d'un outil approprié, tel qu'un pistolet à commande manuelle 40 du type représenté sur la Fig. 1, au travers des orifices 41 qui sont situés en des endroits appropriés pour le remplissage aisé des passages, les orifices ayant de préférences des extrémités extérieures 42 élargies pour permettre l'introduction du pistolet. Dans le raccord en "T" illustré, les orifices sont des trous forés et fraisés à travers les parois semi-circulaires de l'emboîture, l'un deux (voir Fig. 4) étant angulairement espacé d'un côté au-dessus du plan de séparation des demi-raccords et un autre étant espacé de l'autre côté en dessous du même plan de séparation. Comme le montre la Fig. 4, les trous des orifices sont ici forés dans des bossages 43 ménagés sur les parois extérieures des emboîtures à une distance de l'ordre de dix à vingt-cinq degrès à partir du plan de séparation, l'écartement actuellement préféré étant d'environ dix sept degrés. Cet écartement est jugé suffisamment proche pour obtenir de bons écoulements du matériau d'étanchéité adhésif dans les deux directions à partir de l'orifice, le premier se faisant autour de l'emboîture 19 à distance des brides adjacentes, tandis que l'autre se dirigeant vers les brides adjacentes le long du passage ménagé dans celles-ci. Il s'est avéré que deux orifices formés sur les côtés opposés de chaque emboîture et de la manière illustrée sur la Fig. 4 pour un raccord en "T" assurent un bon remplissage de tous les passages. Il est bien entendu possible de ménager des orifices supplémentaires dans toute partie des passages qui ne serait pas aisément atteinte par l'écoulement, simplement en forant des trous supplémentaires à travers une paroi extérieure de ces portions de passages. De même, si le matériau d'étanchéité adhésif durcissait avant que le remplissage soit achevé (par exemple, si l'opération est interrompue puis reprise), un orifice additionnel peut être foré in situ dans la portion non remplie, à titre de mesure corrective.

Il est évident qu'un écoulement correct du matériau d'étanchéité adhésif le long des passages formés par les rainures 23, 24 et 25 nécéssite l'échappement de l'air emprisonné hors des passages en avant de l'écoulement. Les passages sont purgés de leur air, au moins au début, par les autres orifices, de sorte que l'air contenu n'obstrue pas l'écoulement. Lorsque tous les autres orifices ont été bouchés, le matériau d'étanchéité adhésif pourra néanmoins être encore forcé de s'écouler pour remplir les dernières parties car il subsiste toujours une certaine capacité d'aération des passages à travers le jeu qui existe inévitablement entre les pièces tubulaires fabriquées. Il en résulte que les joints entre pièces ne sont pas totalement étanches à l'air, mais qu'ils doivent uniquement être suffisamment fermés pour contenir, sans fuite préjudiciable, le matériau d'étanchéité adhésif relativement épais. Toutefois, en cas de fuite accidentelle du matériau d'étanchéité, celui-ci pourra être essuyé à la fin de l'opération de mise en place.

Sur la Fig. 7 est représenté un autre type de raccord 18′, à savoir un raccord coudé d'enceinte secondaire, et qui illustre les modifications qui peuvent être apportées pour reproduire un raccord ayant une autre configuration standard. Les deux demi-emboîtures 19 s'ouvrent vers l'extérieur du raccord dans des directions qui sont angulairement espacées de quatre-vingt-dix degrès, exactement comme deux des demi-emboîtures de la Fig. 6. Donc, la bride 22 dans la partie inférieure gauche de la Fig. 7 peut être la même que la bride inférieure gauche 22 de la Fig. 6, tandis que la bride 20 sur le côté opposé de la partie de raccord est courbe et comporte une rainure courbe 23. Pour le reste le raccord 18′ est le même que le raccord 18 de la Fig. 6, de sorte que les éléments correspondants sont désignés par les mêmes repères numériques.

Pour permettre l'installation du système d'enceinte secondaire de retenue 10 autour du système de canalisation primaire 11 sans qu'il soit nécessaire de démonter les divers composants de la canalisation primaire, les tubes 15 du système d'enceinte secondaire sont également divisés longitudinalement en une pluralité d'éléments tubulaires allongés 45, de préférence deux, disposés de part et d'autre d'un plan de séparation, pour être ensuite réunis autour des tubes 13 du système de canalisation primaire. Bien qu'il soit possible de prévoir des surfaces de contact épaissies le long des éléments tubulaires et d'utiliser une variante des raccords à brides pour les tubes, il s'avère que la nécessité d'avoir des extrémités sans bride pour l'insertion des raccords dans les emboîtures et pour d'autres considérations pratiques dues à la longueurs, au coût, et à la complexité de la fabrication, impose, pour la conception et la construction des tubes d'enceinte secondaire, une approche quelque peu différente.

Conformément à la présente invention, les éléments tubulaires 45 sont munis de moyens de couplage à interaction, le long de leurs bords de contact, pour assurer le verrouillage mécanique des éléments l'un à l'autre, et aussi pour définir des passages d'étanchéité intérieurs 47 s'étendant le long des moyens de couplage, et destinés à recevoir le matériau d'étanchéité adhésif injecté venant fixer et sceller les éléments tubulaires. Selon la mise en oeuvre préférentiellement illustrée sur les Fig. 4 et 8 à 10, les moyens de couplage comprennent des éléments d'assemblage à nervure et gorge 48 et 49 s'engageant élastiquement le long des bords de contact latéraux des raccords, et des languettes intérieures allongées 50 qui sont intégrées aux surfaces intérieures des éléments tubulaires le long d'un bord latéral de chaque raccordement longitudinal, et s'étendent à travers le plan de séparation, le long de la surface interne de la portion de bord adjacente de l'autre élément tubulaire. Les languettes sont écartées des surfaces internes des éléments tubulaires le long des bords de contact longitudinaux de façon à définir les passages d'étanchéité 47 et butent contre les dites surfaces internes le long d'une ligne 51 au voisinage de leurs bords libres.

Les éléments interactifs d'assemblage à nervure et gorge comprennent, sur un bord de chaque élément tubulaire 45, une nervure 48 ayant une portion de bord libre élargie, légèrement déportée latéralement, et une gorge 49 disposée dans le bord de contact de l'autre élément tubulaire 45, la dite gorge étant profilée et positionnée de façon à recevoir la nervure avec verrouillage par clipsage. A cet effet, les gorges ont des faces d'entrée légèrement plus étroites que les portions de bord libre des nervures, pour recevoir les nervures en un assemblage interactif. Les deux nervures d'un tube s'étendent au travers du plan de séparation dans des directions opposées, et verrouillent mécaniquement les éléments tubulaires l'un à l'autre, indépendamment du matériau d'étanchéité adhésif.

De façon similaire, les languettes intérieures 50 sont projetées dans des directions opposées au travers du plan de séparation, et sont formées le long des mêmes bords latéraux des éléments tubulaires que les rainures 49, mais sont déportées vers l'intérieur à partir de ces bords latéraux. Ici, le bord libre 52 de chaque languette est profilé en un bourrelet incurvé sur le côté extérieur de la languette, et il est de préférence prévu des moyens pour presser les bourrelets fermement en application étanche sur la surface du tube, afin de minimiser les fuites de matériau d'étanchéité adhésif. Suivant une mise en oeuvre préférée, cette action de pressage est assurée par une nervure intérieure 53 ayant une section transversale en "L" et définissant une corniche intérieur 54 qui s'ouvre en direction du bord adjacent de l'élément tubulaire 45 et qui est positionnée de façon à recevoir le bord libre des languettes 50 lorsque les éléments tubulaires sont assemblés par pressage, et à presser le bourrelet fermement contre la surface interne du tube.

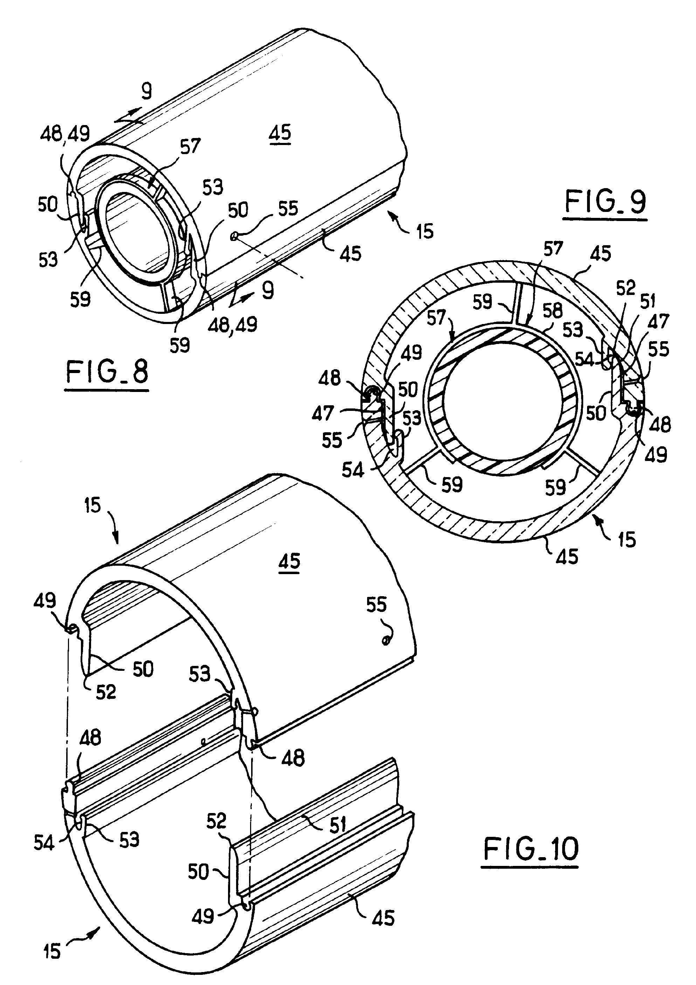

Comme le montrent les Fig. 8 à 10, les orifices d'injection 55 sont espacés le long des éléments tubulaires pour s'ouvrir dans les passages d'étanchéité intérieurs 47 à travers les parois latérales des éléments tubulaires. Ceux-ci sont composés de trous forés ayant des extrémités extérieures élargies pour l'introduction de l'outil d'injection du matériau d'étanchéité adhésif et sont espacés suivant les circonstances. Dans la mise en oeuvre préférentielle, en utilisant les colles précitées d'Industrial Polychemical Service et avec des passages ayant une largeur de l'ordre de . 25 à . 75 pouce (6,3 à 19 mm) et une fente ou épaisseur de l'ordre de . 015 à . 05 pouce (0,38 à 1,27 mm), un espacement longitudinal satisfaisant des orifices est de l'ordre de 18 pouces (457 mm). Comme pour les raccords tubulaires, le matériau préféré est le PVC transparent, de sorte que l'écoulement du matériau d'étanchéité adhésif blanc le long des passages puisse être observé pour s'assurer du scellage complet.

Les jeux entre les éléments interactifs d'assemblage à nervure et gorge 48 et 49 sont représentés de manière quelque peu exagérée dans la Fig. 9, pour souligner le fait que le matériau d'étanchéité adhésif qui est injecté dans les passages intérieurs 47 sous une pression d'injection modérée, s'écoule non seulement le long des passages entre les orifices mais aussi dans les gorges 49 et autour des nervures 48. Le verrouillage des éléments tubulaires 45 l'un à l'autre et lorsque le matériau d'étanchéité adhésif à durci, se traduit par un assemblage virtuellement permanent des éléments tubulaires l'un à l'autre en une pièce fonctionnellement unitaire.

L'invention permet ainsi d'obtenir un véritable tube d'enceinte secondaire 15 qui peut être constitué de pièces extrudées 45 et aisément assemblé autour des tubes 13 d'un système de canalisation primaire 11. Typiquement, les tubes sont produits avec une épaisseur de paroi normalisée de l'ordre de . 162 pouce (4, 11 mm) pour un tube de 4 pouces (107 mm) et avec une épaisseur de paroi proportionnellement plus forte pour les tubes plus grands.

A titre de simple illustration, les Fig. 8 et 9 montrent une pièce d'écartement 57, d'un type qui est en principe conventionnel dans les systèmes d'enceinte secondaire, pour supporter un tube extérieur 15 en position généralement coaxiale autour d'un tube intérieur 13. Cette pièce d'écartement comprend un corps courbe 58 en matière élastiquement souple s'étendant sur un arc supérieur à une demi-circonférence, laissant une fente sur un côté, et une pluralité de doigts radiaux 59 se projetant vers l'extérieur à partir du corps, avec les extrémités extérieures des doigts disposées sur une circonférence commune. Le diamètre intérieur ("D.I.") du corps est dimensionné de façon à correspondre au diamètre extérieur ("D.E.") d'un tube de canalisation primaire de diamètre donné, tel qu'un tube de deux pouces (57 mm) et la circonférence commune des pointes est dimensionnée de façon à correspondre au D.I. d'un élément de tubage secondaire donné, tel qu'un tube de quatre pouce (107 mm). Pour sa mise en oeuvre le corps de la pièce d'écartement est fléchi pour ouvrir et adapter la fente sur le tube de canalisation primaire, puis il est ensuite relâché et reprend sa forme initiale en se refermant autour du dit tube. Le tube d'enceinte secondaire est alors assemblé autour du tube de canalisation primaire, et au-dessus d'un nombre approprié de pièces d'écartement destinées à supporter la longueur du tube d'enceinte secondaire, les doigts 59 touchant le D.I. du tube secondaire pour maintenir celui-ci en position autour du tube primaire.

On comprendra qu'il n'est pas nécessaire de réaliser des assemblages de précision, la fonction importante étant le support des deux systèmes de tubes en position coaxiale. En pratique, on suppose que les sytèmes d'enceinte secondaire seront disponibles en un nombre limité de diamètres, et qu'il sera prévu des pièces d'écartement pouvant s'adapter à tous les diamètres différents des tubes primaires à couvrir. Par exemple, on peut penser que deux diamètres de tubes d'enceinte secondaire, quatre pouces (107 mm) et six pouces (159,4 mm), conviendront pour toutes les dimensions de tubes de canalisation primaire jusqu'à quatre pouces (107 mm). Des tubes secondaires plus grands que six pouces (159,4 mm), peuvent bien entendu être prévus, lorsque les circonstances le justifient.

Il faut noter que la surcharge en poids de ces systèmes d'enceinte secondaire doit recevoir une attention appropriée lors de la conception des appuis extérieurs, ainsi que lors de la conception des pièces d'écartement 57. Les doigts radiaux 59 des pièces d'écartement doivent présenter une robustesse suffisante pour supporter la charge à laquelle ils sont soumis. Dans le cas présent, on a représenté trois doigts angulairement espacés, mais on peut en prévoir un plus grand nombre pour assurer une capacité portante plus élevée.

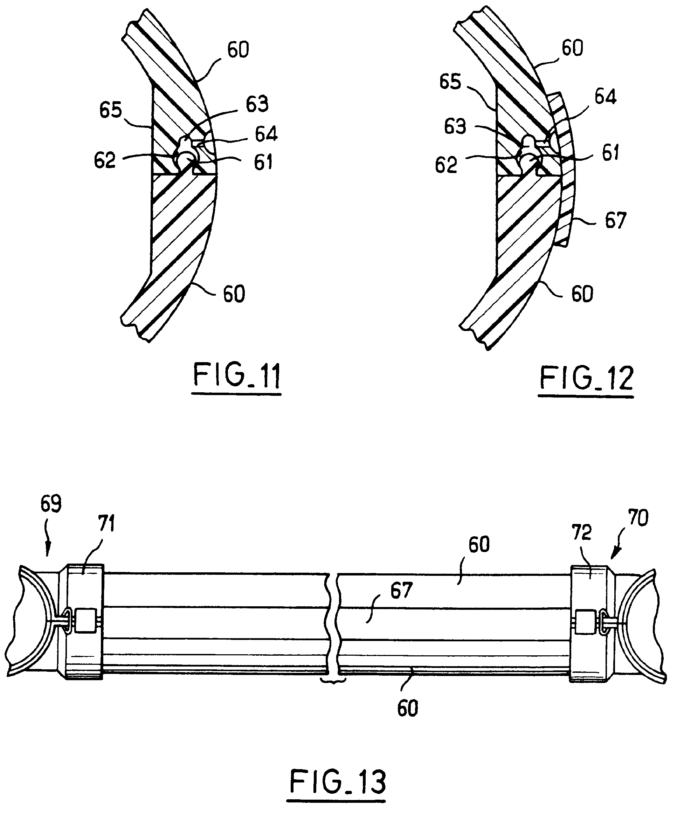

Une autre conception des éléments tubulaires est illustrée sur les Fig. 11 à 13. Sur la Fig. 11, les bords de contact des éléments tubulaires 60 sont réunis par des éléments d'assemblage à nervure et gorge 61 et 62 verrouillées, la nervure 61 présentant une portion de bord libre élargie et arrondie, et la gorge 62 offrant une face d'entrée plus étroite que la partie arrondie de la gorge et une partie intérieure élargie définissant un passage d'étanchéité prolongé intérieurement en 63. Des orifices 64 s'ouvrent dans le passage à travers la paroi latérale de l'élément tubulaire 60, les parois latérales étant de préférence épaissies au voisinage des bords de contact par ajout de matière sur les faces internes 65 des éléments.

Lorsque les passages 62, 63 de ces éléments tubulaires 60 sont remplis de matériau d'étanchéité adhésif, le dit matériau assemble fermement les éléments et scelle leurs bords de contact. On peut toutefois s'attendre à certaines fuites du matériau injecté sous pression autour des nervures 61 et même entre les bords des tubes. Cette configuration est de ce fait plus appropriée pour une utilisation dans un système d'évacuation sans pression.

Avec un système de canalisation primaire qui contient un fluide sous pression, il peut être souhaitable de renforcer le tube d'enceinte secondaire de la Fig. 11, de la manière illustrée sur la Fig. 12, en fixant par collage une bande de renforcement 67 sur les faces extérieures des éléments tubulaires 60 par dessus le joint longitudinal entre les bords de contact. Une telle bande peut avoir une face intérieure incurvée 68, pour une bonne application étanche sur les éléments tubulaires lorsque le matériau d'étanchéité adhésif durcit et fait sa prise. La face extérieure ne nécessite pas d'être incurvée, mais elle est représentée ici, avec une courbure en raison de la courbure transversale de la bande toute entière.

Une bande de renforcement 67 du type représente sur la Fig. 12, est illustrée sur la Fig. 13 sur un tronçon d'enceinte secondaire, entre deux raccords 69 et 70. les extrémités de la bande sont ajustées aussi près que possible des emboîtures 71 et 72 des deux raccords qui maintiennent le tube, pour assurer un renforcement total du tube entre les raccords.

La méthode d'assemblage d'un système de tubage secondaire 10 conforme à la présente invention ressort clairement de la description détaillée qui précède, mais un résumé succint s'avère utile pour assurer une totale compréhension. On supposera dans le présent exemple que le système doit être appliqué, aux fins de réhabilitation, sur une canalisation primaire existante 11, illustrée sur la Fig. 1 et 2, mais il va de soi que les deux systèmes peuvent être assemblés en même temps, si nécessaire.

En premier lieu, les composants des éléments tubulaires et de raccord du système d'enceinte doivent être fournis à la dimension appropriée pour s'adapter sur les composants du système de canalisation primaire, ainsi qu'en nombre et longueurs appropriés, suivant les caractéristiques du système primaire. Il est prévu des pièces d'écartement 57 s'adaptant sur les canalisations primaires 13 et dans les éléments tubulaires secondaires 15, les dites pièces d'écartement étant positionnées le long de la canalisation primaire pour recevoir les éléments tubulaires secondaires. Ces derniers sont fournis en longueur standard mais peuvent être coupés pour répondre à des conditions spéciales.

Avec un groupe de pièces d'écartement mises en place sur un tube de canalisation primaire 13, les éléments 45 d'un élément tubulaire secondaire sont placés de part et d'autre du tube primaire, comme cela est illustré sur la Fig. 2, avec leurs extrémités disposées au voisinage des extrémités des tubes de canalisation primaire et ils sont assemblés par pressage autour du tube primaire jusqu'à ce que les moyens de couplage 48, 49 soient engagés l'un dans l'autre pour maintenir ensemble les éléments. Les éléments tubulaires secondaires disposés autour dudit raccord primaire sont assemblés de la même manière et les tubes secondaires sont alors prêts pour le collage à l'aide du matériau d'étanchéité adhésif. Cette opération peut être réalisée immédiatement, ou reportée ultérieurement au cours d'une opération générale de collage lorsque le raccord 14 de l'enceinte secondaire est mis en place.

Pour la mise en oeuvre, les deux parties 17 et 18 du raccord 14 sont disposées de part et d'autre du raccord 12 et en position de recouvrement par rapport aux extrémités des éléments tubulaires secondaires assemblés 15, et sont assemblées ensuite. Les nervures et gorges coopérantes 31 et 32 aident à l'alignement des parties du raccord lors de l'assemblage.

Ensuite, les clips 29 sont placés sur les brides 20, 21 et 22 des parties du raccord, comme le montrent les Fig. 1 et 3. Il peut toutefois s'avérer souhaitable de poser des pinces provisoires, telles que deux paires de pinces ou plus (non représentées) pour maintenir ensemble les parties du raccord pendant la mise en place des clips et d'enlever les pinces lorsque le raccord est fixé. Les éléments tubulaires secondaires doivent être correctement emboîtés dans les emboîtures 19 des raccords pendant cette partie de l'opération.

Une fois le raccord d'enceinte secondaire 14 et les tubes 15 associés mis en place, serrés et verrouillés l'un à l'autre, on applique le matériau d'étanchéité adhésif à travers les orifices 41 et 55 pour remplir les passages d'étanchéité formés par les rainures 23, 24, 25 et 28 dans le raccord et les passages 47 dans les tubes, en même temps que les jeux dans les moyens de couplage 48 et 49. Grâce à l'outil de remplissage introduit dans un des orifices 41, le matériau d'étanchéité adhésif est injecté dans la gorge 28 de l'emboîture pour s'écouler autour de ladite emboîture dans les deux directions et dans/ainsi que le long des passages des brides adjacentes, généralement jusqu'à mi-chemin dans chaque direction vers l'autre orifice le plus proche. La progression du matériau d'étanchéité adhésif le long des passages peut être observée pendant l'opération, et la pression d'injection peut être réglée pour modifier la vitesse de l'écoulement. Lorsque l'opération de remplissage des parties accessibles est achevée, l'outil d'injection est déplacé vers l'orifice suivant, jusqu 'à ce que les passages dans les emboîtures et entre les brides soient remplis, comme peut d'ailleurs le confirmer l'observation visuelle du matériau d'étanchéité adhésif à travers le plastique transparent.

Les clips 29 doivent être laissés en place, au moins jusqu'à ce que le matériau d'étanchéité adhésif durcisse et de préférence au moins pendant une période supplémentaire de prise déterminée par les caractéristiques du produit. C'est ainsi que si le matériau d'étanchéité adhésif pour tube PVC acquiert un niveau important de résistance en quelques heures, il est recommandé néanmoins d'attendre au moins quarante huit heures avant d'appliquer une charge importante.

De même, l'écoulement du matériau d'étanchéité adhésif dans les passages 47 des tubes 15 de l'enceinte secondaire peut être observé visuellement pour s'assurer qu'il s'est formé un joint complet, continu et étanche à l'air. Des temps similaires de durcissement et de prise doivent être respectés avant d'appliquer des charges à ces tubes.

De cette manière les raccords et les tubes de la canalisation primaire sont enfermés successivement dans les composants de l'enceinte secondaire jusqu 'à ce que la totalité du système d'enceinte secondaire soit mis en place. Les opérations sont sensiblement identiques avec les différentes variantes de l'invention, les différences portant uniquement sur des détails de construction des composants.

Il résulte de ce qui précède que la présente invention propose un nouveau sytème d'enceinte secondaire de retenue et un nouveau procédé d'installation, qui constituent des progrès importants par rapport aux systèmes et aux composants antérieurs qui avaient été proposés. Elle permet en effet d'obtenir un système d'enceinte secondaire fonctionnellement efficace, qui est relativement simple à installer, et qui facilite la confirmation d'une étanchéité complète et effective des raccords par simple observation visuelle du matériau d'étanchéité. Les composants peuvent être produits à un coût raisonnable, en utilisant des matériaux et des procédés de fabrication standard, le résultat étant un système d'enceinte secondaire hautement efficace qui est également économique. En outre, l'observation visuelle des fuites est possible, la surveillance des interstices avec des systèmes de détection automatique (non représentés) peut y être incorporée, et les réparations peuvent être effectuées avec une relative facilité, tant dans le système primaire que, si cela est nécessaire, dans le système secondaire.

## Revendications

1. Système d'enceinte secondaire de retenue d'eau, destiné en particulier à empêcher la fuite des fluides véhiculés par une canalisation primaire, qui comprend :
- des tubes de canalisation primaire (13) reliés au moins par un raccord primaire (12) ;
- des tubes d'enceinte secondaire (15) divisés longitudinalement en une pluralité d'éléments tubulaires allongés (45), disposés de part et d'autre d'un ou de plusieurs plans de séparation, assemblés autour des tubes de canalisation primaire (13) et reliés par un système de raccord secondaire (14) constitué de deux parties de raccord (17, 18) conçues de façon à être disposées autour du raccord primaire (12) et accolées l'une à l'autre par assemblage bord à bord en définissant des emboîtures tubulaires (19) recevant les extrémités des tubes d'enceinte secondaire ;
- des passages pour matériau d'étanchéité (23, 24, 25) prévus entre les surfaces de contact des deux parties du raccord (17, 18), dans ledit raccord assemblé, qui sont remplis d'un matériau d'étanchéité adhésif (27) pour fixer et sceller l'une à l'autre lesdites parties du raccord et ;
- une gorge d'étanchéité (28) prévue dans la paroi intérieure de chaque emboîture (19), cette gorge débouchant dans des passages d'étanchéité (23, 24, 25) encerclant l'extrémité d'un tube d'enceinte secondaire (15) et qui sont remplis dudit matériau d'étanchéité adhésif de manière que ce dernier forme un joint continu ininterrompu entourant totalement l'espace intérieur ménagé dans le système de raccord (14) complétant ainsi l'assemblage raccord-tube.

2. Système selon la revendication 1, caractérisé en ce que lesdites parties (17, 18) du système de raccord secondaire (14) sont munies de brides en saillie latérale (20, 21, 22), afin d'augmenter les surfaces de contact des deux parties du raccord, lesdites brides étant pourvues de rainures (23, 24, 25) enfermées entre lesdites surfaces de contact et constituant lesdits passages remplis dudit matériau d'étanchéité adhésif (27).

3. Système selon la revendication 2, caractérisé en ce que lesdites rainures (23, 24, 25) sont entourées par des surfaces planes opposées, à l'exception des ouvertures d'entrées (30) dans lesdites gorges d'étanchéité (28), ces surfaces planes comportant des éléments coopérants (31-32) se faisant face latéralement en créant des surfaces complémentaires de contact.

4. Système selon l'une quelconque des revendications précédentes, caractérisé en ce que l'on prévoit des moyens pour assurer la fixation l'une dans l'autre desdites parties (17, 18) du système de raccord secondaire (14), avant l'application du matériau d'étanchéité adhésif.

5. Système selon la revendication 4, caractérisé en ce que lesdits moyens de fixation sont constitués par des pinces, notamment du type clips (29).

6. Système selon l'une quelconque des revendications précédentes, caractérisé en ce qu'il comporte un volume de trop-plein le long des bords extérieurs desdits passages d'étanchéité (23, 24, 25).

7. Système selon l'une quelconque des revendications précédentes, caractérisé en ce que ledit volume de trop-plein est formé par des canaux (33) débordant dans des "puits", disposés le long des bords extérieurs desdites rainures (23, 24, 25), pour assurer une évacuation du matériau d'étanchéité adhésif.

8. Système selon l'une quelconque des revendications précédentes, caractérisé en ce qu'il comporte des gorges (34) formées de part et d'autre desdites gorges d'étanchéité (28), afin d'assurer un écoulement du matériau d'étanchéité adhésif hors desdites gorges d'étanchéité (28) vers les extrémités opposées des emboîtures (19).

9. Système selon l'une quelconque des revendications précédentes, caractérisé en ce que des orifices (41) ménagés dans lesdites emboîtures permettent l'injection du matériau d'étanchéité adhésif.

10. Système selon l'une quelconque des revendications précédentes, caractérisé en ce que ledit matériau d'étanchéité adhésif est une colle pour tube plastique, notamment une colle thermodurcissable.

11. Système selon l'une des revendications précédentes caractérisé en ce que lesdits éléments tubulaires (45) sont munis de moyens de couplage, le long de leurs bords de contact, pour d'une part assurer leur interverrouillage mécanique et pour d'autre part, définir des passages d'étanchéité (47) s'étendant longitudinalement le long desdits moyens de couplage et qui sont remplis d'un matériau d'étanchéité adhésif assurant la fixation et le scellement desdits éléments tubulaires.

12. Système selon la revendication 11, caractérisé en ce que lesdits moyens de couplage comprennent des éléments d'assemblage à nervure et gorge (48, 49) s'engageant élastiquement le long des bords de contact latéraux des raccords, et des languettes intérieures (50) intégrées aux surfaces intérieures desdits éléments tubulaires (45), lesdites languettes étant écartées des surfaces internes desdits éléments tubulaires le long des bords de contact longitudinaux afin de définir lesdits passages pour le matériau d'étanchéité (47).

13. Système selon la revendication 12, caractérisé en ce que ladite nervure (48) des éléments d' assemblage disposés sur un bord de chaque élément tubulaire (45), présente une portion à bord libre élargi et en ce que ladite gorge (49), disposée dans le bord de contact de l'autre élément tubulaire (45) est profilée et positionnée de manière à recevoir ladite nervure avec un verrouillage élastique.

14. Système selon l'une des revendications 12 ou 13, caractérisé en ce que lesdites languettes intérieures (50) sont formées le long des mêmes bords latéraux des éléments tubulaires que lesdites rainures (49), et sont déportées vers l'intérieur à partir desdits bords latéraux, et comportent un bord libre (52) qui est profilé selon un bourrelet incurvé sur le coté extérieur de ladite languette.

15. Système selon la revendication 14, caractérisé en ce que l'on prévoit des moyens pour appliquer lesdits bourrelets (52), de façon étanche sur la surface de l'élément tubulaire (45).

16. Système selon la revendication 15, caractérisé en ce que lesdits moyens consistent en une nervure intérieure (53) à section transversale en "L", définissant une corniche intérieure (54) s'ouvrant vers le bord adjacent dudit élément tubulaire (45) et qui est positionnée pour recevoir le bord libre (52) desdites languettes (50) lors de l'assemblage par pressage desdits éléments tubulaires.

17. Système selon l'une quelconque des revendications précédentes, caractérisé en ce que les éléments tubulaires (60) des tubes d'enceinte secondaire sont réunis par leurs bords de contact à l'aide d'éléments d'assemblage à nervure et gorge (61, 62) maintenus par verrouillage, ladite gorge (62) présentant une partie inférieure élargie définissant un passage pour matériau d'étanchéité (63), ladite gorge et ledit passage étant remplis d'un matériau d'étanchéité adhésif maintenant et scellant lesdits bords de contact.

18. Système selon l'une quelconque des revendications précédentes, caractérisé en ce que le tube d'enceinte secondaire (60) est renforcé à l'aide d'une bande de renforcement (67) fixée sur les faces extérieures desdits éléments tubulaires au-dessus du joint longidutinal entre les bords de contact.

19. Procédé pour former un système d'enceinte secondaire de retenue selon les Revendications 1 à 18 autour d'un système de canalisation primaire comportant un système de raccord primaire raccordant au moins deux tubes de canalisation primaire, caractérisé en ce qu'il comprend les opérations suivantes :
- prévoir un raccord (14) de tubes d'enceinte secondaire, longitudinalement divisé, comprenant deux parties de raccord (17-18) conçues de façon à être assemblées en position bord à bord autour du raccord primaire (12), et présentant au moins deux emboîtures tubulaires (19) pour recevoir des tubes d'enceinte secondaire (15);
- définir des premiers passages pour matériau d'étanchéité intérieurs (23-24-25) entre les bords assemblés desdites parties ce raccord secondaire;
- positionner à l'aide des pièces d'écartement (57) les éléments tubulaires (45) formant tube d'enceinte secondaire (15) autour des tubes de canalisation primaire (13) et les verouiller l'un à l'autre;
- positionner les parties de raccord secondaire (17-18) autour du raccord primaire (12) et les tubes d'enceinte secondaire (15) autour des tubes de canalisation primaire (23), et serrer les parties du raccord l'une contre l'autre;
- définir des deuxièmes passages pour matériau d'étanchéité (28) intérieurs autour des tubes d'enceinte secondaire (15) ajustés serrés dans les emboîtures;
- injecter un matériau d'étanchéité adhésif (27) sous forme fluide dans les premiers et deuxièmes passages d'étanchéité intérieurs pour remplir ces derniers et former des joints adhésifs étanches entre les bords raccordés et autour de chaque emboîture tubulaire et;
- maintenir serrées à l'aide de dispositifs mécaniques les parties du raccord secondaire (17 - 18) au moins jusqu'à ce que ledit matériau d'étanchéité adhésif (27) soit durci.

20. Procédé suivant la revendication 19, caractérisé en ce qu'après l'opération de formation desdits premiers et deuxièmes passages d'étanchéité intérieurs, ceux-ci communiquent l'un à l'autre pour constituer un passage continu et un dispositif de scellement, et en ce que l'opération d'injection d'étanchéité dudit matériau d'étanchéité est réalisée à la fois dans les premiers et dans les deuxièmes passages pour matériau d'étanchéité sensiblement en même temps.

21. Procédé suivant l'une des revendications 19 ou 20, comportant des tubes d'enceinte secondaire (15) longitudinalement divisés composés chacun d'une pluralité d'éléments tubulaires (45) pouvant être assemblés bord à bord autour d'un tube de canalisation primaire (13) et comprenant des moyens de couplage le long de leurs bords de contact pour verrouiller mécaniquement lesdits éléments tubulaires l'un à l'autre et aussi pour définir des passages pour matériau d'étanchéité intérieurs (47) s'étendant le long des moyens de couplage, caractérisé en ce qu'il comprend en outre les opérations suivantes :
- verrouillage des éléments tubulaires (45) l'un sur l'autre autour des tubes de canalisation primaire (13) à l'aide desdits moyens de couplage et;
- injection d'un matériau d'étanchéité adhésif (27) sous forme fluide dans lesdits passages pour matériau d'étanchéité intérieurs (47) pour remplir ces derniers, et former des joints adhésifs étanches entre les éléments tubulaires (45).

22. Procédé suivant la revendication 21, caractérisé en ce que l'opération d'injection comprend l'injection du matériau d'étanchéité adhésif (27) dans les jeux et autour des moyens de couplage (48-49 ou 61 - 62) pour fixer ensemble les éléments tubulaires (45).

23. Procédé pour contrôler la formation d'un joint étanche dans des passages d'étanchéité ménagés entre au moins deux éléments tubulaires (45) ou un tube d'enceinte secondaire (15) et un raccord secondaire (14) fixés l'un à l'autre par un matériau d'étanchéité adhésif, selon les Revendications 1 à 18 caractérisé en ce que lesdits éléments tubes ou raccords sont réalisés en un matériau translucide ou transparent et ledit matériau d'étanchéité adhesif en un matériau de couleur contrastée et fluide, et en ce que l'on observe et l'on contrôle l'écoulement dudit matériau d'étanchéité adhésif dans lesdits passages d'étanchéité pour s'assurer qu'il se forme un joint complet, continu et étanche.

## Patentansprüche

1. Doppelwandsystem für einen Wasserbehälter, insbesondere zur Verhinderung des Ausströmens von Trägerflüssigkeit aus einem primären Rohrsystem, **dadurch gekennzeichnet,** daß es
- Rohre eines primären Leitungsnetzes (13), die wenigstens durch ein Primäranschlußstück (12) verbunden sind,
- sekundäre Mantelrohre (15), welche in Längsrichtung in mehrere längsgestreckte rohrförmige Elemente (45) unterteilt sind, die zu beiden Seiten einer oder mehrerer Trennebenen angeordnet und um die Rohre des primären Leitungsnetzes (13) herum zusammengesetzt und von einem sekundären Verbindungssystem (14) verbunden werden, das aus zwei Verbindungsteilen (17, 18) besteht, die um das Primäranschlußstück (12) angeordnet und miteinander durch Verrohrung ihrer Enden verbunden sind, indem sie rohrförmige Anschlußstellen bilden, welche die Enden der sekundären Mantelrohre aufnehmen,
- Aufnahmen für Dichtungsmaterial (23, 24, 25) in dem zusammengesetzten Verbindungsstück, die zwischen den Kontaktflächen der beiden Verbindungsteile (17, 18) vorgesehen sind und mit einem haftenden Dichtungsmaterial (27) gefüllt sind, um die Teile des Verbindungsstücks aneinander zu befestigen und dicht zu verschließen, und
- eine in der Innenwand jeder Anschlußstelle (19) vorgesehene Dichtnut (28) umfaßt wobei diese Nut in Aufnahmen für Dichtungsmaterial (23, 24, 25) mündet, die das Ende eines sekundären Mantelrohrs (15) umgeben und mit dem haftenden Dichtungsmaterial derart gefüllt sind, das dieses eine kontinuierliche Dichtungsmasse bildet, die ohne Unterbrechung den in dem Verbindungssystem (14) ausgesparten Innenraum völlig einhüllt und so die aus Verbindung und Rohr bestehende Baueinheit vervollständigt.

2. System nach Anspruch 1, **dadurch gekennzeichnet,** daß die Teile (17, 18) des sekundären Verbindungssystems (14) mit seitlich vorstehenden Flanschen (20, 21, 22) versehen sind, um die Kontaktflächen der beiden Verbindungsteile zu vergrößern, wobei die Flansche mit Rillen (23, 24, 25) versehen sind, die zwischen den Kontaktflächen eingeschlossen sind und die mit den haftenden Dichtungsmaterial (27) gefüllten Aufnahmen bilden.

3. System nach Anspruch 2, **dadurch gekennzeichnet,** daß die Rillen (23, 24, 25) mit Ausnahme der Einlaßöffnungen (30) in den Dichtnuten (28) von ebenen gegenüberliegenden Flächen umgeben sind, wobei diese ebenen Flächen kooperierende Elemente (31 - 32) aufweisen, die seitlich zueinander gerichtet sind und so komplementäre Kontaktflächen bilden.

4. System nach einem der vorhergehenden Ansprüche, **dadurch** **gekennzeichnet,** daß Einrichtungen zum Befestigen der Teile (17, 18) des Sekundärverbindungssystems vor der Einbringung des haftfähigen Dichtungsmaterials vorgesehen sind.

5. System nach Anspruch 4, **dadurch gekennzeichnet,** daß diese Befestigungseinrichtungen aus Klemmen, insbesondere solchen des Klip-Typs, bestehen.

6. System nach einem der vorhergehenden Ansprüche, **dadurch** **gekennzeichnet,** daß entlang der Außenkanten der Dichtungsaufnahmen (23, 24, 25) ein Überlaufvolumen vorhanden ist.

7. System nach einem der vorhergehenden Ansprüche, **dadurch** **gekennzeichnet,** daß das Überlaufvolumen durch Kanäle (33) gebildet wird, die in "Brunnen" münden, die entlang der Außenkanten der Rillen (23, 24, 25) angeordnet sind, um ein Entfernen des haftfähigen Dichtungsmaterials zu gewährleisten.

8. System nach einem der vorhergehenden Ansprüche, **dadurch** **gekennzeichnet,** daß es auf beiden Seiten der Dichtungsnuten (28) gebildete Nuten (34) aufweist, um ein Ausfließen des haftfähigen Dichtungsmaterials aus den Dichtnuten (28) heraus zu den gegenüberliegenden Enden der Verbindungsstücke (19) zu gewährleisten.

9. System nach einem der vorhergehenden Ansprüche, **dadurch** **gekennzeichnet,** daß in den Verbindungsstücken vorgesehene Öffnungen (41) das Einspritzen von haftfähigem Dichtungsmaterial erlauben.

10. System nach einem der vorhergehenden Ansprüche, **dadurch** **gekennzeichnet,** daß das haftfähige Dichtungsmaterial ein Klebematerial für Plastikrohre, insbesondere ein wärmehärtbarer Kleber, ist.

11. System nach einem der vorhergehenden Ansprüche, **dadurch** **gekennzeichnet,** daß die rohrförmigen Elemente (45) entlang ihrer Kontaktränder mit Verbindungselementen versehen sind, um einerseits ihr mechanisches gegenseitiges Verriegeln miteinander zu gewährleisten und um andererseits Dichtungsaufnahmen (47) zu definieren, die sich in Längsrichtung entlang der Länge der Verbindungselemente erstrecken und mit einem haftfähigen Dichtungsmaterial gefüllt sind, das das Festhalten und hermetische Abschließen der rohrförmigen Elemente gewährleistet.

12. System nach Anspruch 11, **dadurch gekennzeichnet,** daß die Verbindungselemente aus Feder und Nut bestehende Verbindungsorgane (48, 49) umfassen, die sich nachgiebig längs der seitlichen Kontaktränder der Verbindungsstücke erstrecken, und Innenzungen (50), die in die Innenflächen der rohrförmigen Elemente (45) integriert sind, wobei die Zungen von den Innenflächen der rohrförmigen Elemente entlang der länglichen Kontaktkanten weggespreizt sind, um die Aufnahmen für das Dichtungsmaterial (47) zu bilden.

13. System nach Anspruch 12, **dadurch gekennzeichnet,** daß die Feder (48) der am Rand jedes rohrförmigen Elements (45) angeordneten Verbindungselemente einen freien vergrößerten Randabschnitt bildet und die im Kontaktrand des anderen Elements angeordnete Nut (49) derart profiliert und angeordnet ist, daß sie die Feder mit elastischer Verrastung aufnimmt.

14. System nach einem der Ansprüche 12 oder 13, **dadurch ge-** **kennzeichnet,** daß die Innenzungen (50) entlang derselben seitlichen Ränder der rohrförmigen Elemente wie die Rillen (49) gebildet und nach innen von den seitlichen Rändern versetzt sind und eine freie Kante (52) aufweisen, die in Art eines Wulstes auf der Außenseite der Zunge profiliert ist.

15. System nach Anspruch 14, **dadurch gekennzeichnet,** daß Elemente zur dichten Aufnahme der Wülste (52) auf der Oberfläche des rohrförmigen Elements (45) vorgesehen sind.

16. System nach Anspruch 15, **dadurch gekennzeichnet,** daß diese Elemente aus einer Innenrippe (53) mit einem "L"-förmigen Querschnitt gebildet sind, die eine innere Aufnahme (54) bildet, welche sich zum Rand des benachbarten rohrförmigen Elements (45) hin öffnet und das freie Ende (52) der Zungen (50) bei Zusammensetzen der rohrförmigen Elemente durch Zusammenpressen aufnimmt.

17. System nach einem der vorhergehenden Ansprüche, **dadurch** **gekennzeichnet,** daß die rohrförmigen Elemente (60) der sekundären Mantelrohre über ihre Kontaktränder mit der Hilfe von Feder/Nut-Verbindungselementen (61, 62) verbunden und durch Verrastung zusammengehalten werden, wobei die Nut (62) einen erweiterten unteren Abschnitt hat, der eine Aufnahme für das Dichtungsmaterial (63) definiert, wobei die Nut und der Durchgang mit einem haftfähigen Dichtungsmaterial gefüllt werden, welches die Kontaktkanten zusammenhält und hermetisch verschließt.

18. System nach einem der vorhergehenden Ansprüche, **dadurch** **gekennzeichnet,** daß das sekundäre Mantelrohr (60) mit der Hilfe eines Verstärkungsbandes (67) verstärkt wird, die auf den Außenseiten der rohrförmigen Elemente über dem länglichen Anschlußstück zwischen den Kontaktkanten befestigt ist.

19. Verfahren zur Bildung eines Doppelwandsystems um ein primäres Leitungsrohrsystem herum, entsprechend den Ansprüchen 1 bis 18, welches ein primäres Verbindungssystem aufweist, das wenigstens zwei Rohre des Primärleitungssystems verbindet, **gekennzeichnet durch:**
- Vorsehen eines in Längsrichtung geteilten Anschlußstücks (14) der sekundären Mantelrohre, welches zwei Verbindungsteile (17 - 18) aufweist, die derart gestaltet sind, daß sie an ihren Rändern um das primäre Anschlußstück (12) herum angeordnet werden, und wenigstens zwei rohrförmige Verbindungselemente (19) zur Aufnahme der Rohre der Sekundärummantelung (15) aufweisen;
- Bilden von ersten Aufnahmen für Dichtungsmaterial (23, 24, 25) zwischen den aneinanderliegenden Rändern der sekundären Verbindungsteile;
- Positionieren der rohrförmigen Elemente (45) mit Hilfe der Abstandshalter (57), wodurch ein sekundäres Mantelrohr (15) um die Rohre des primären Leitungsnetzes (13) herum gebildet wird, und gegenseitiges Verriegeln der Elemente;
- Positionieren der Sekundärverbindungsteile (17 18) um das primäre Anschlußstück (12) und der sekundären Mantelrohre (15) um die Rohre des primären Leitungsnetzes (23) herum und gegenseitiges Verpressen der Verbindungsteile miteinander;
- Bilden von zweiten inneren Aufnahmen für Dichtungsmaterial (28) um die in den Verbindungsteilen ausgerichteten, zusammengepreßten sekundären Mantelrohre (15) herum;
- Einspritzen eines haftfähigen Dichtungsmaterials (27) in fließfähiger Form in die ersten und zweiten inneren Aufnahmen; um die letzteren zu füllen und haftfähige, dichte Verbindungen zwischen den verbundenen Rändern und um jede rohrförmige Verbindungsstelle herum zu erhalten; und
- Festhalten der Teile der Sekundärverbindung (17 - 18) mit Hilfe von mechanischen Vorrichtungen, wenigstens bis zur Aushärtung des haftfähigen Dichtungsmaterials (27).

20. Verfahren nach Anspruch 19, **dadurch gekennzeichnet,** daß nach der Bildung der ersten und zweiten inneren Dichtungsaufnahmen diese zur Bildung eines kontinuierlichen Durchgangs und eines hermetischen Verschlusses zusammenwirken, und der Schritt des Einspritzens des Dichtmaterials zum Dichten zugleich in den ersten und zweiten Aufnahmen für das Dichtmaterial im wesentlichen gleichzeitig verwirklicht wird.

21. Verfahren nach einem der Ansprüche 19 oder 20 mit in Längsrichtung geteilten sekundären Mantelrohren (15), die jeweils aus einer Anzahl von rohrförmigen Elementen (45) zusammengesetzt sind, die Rand auf Rand um ein Rohr des primären Leitungssystems (13) herum zusammensetzbar sind, und entlang ihrer Kontaktränder Verbindungselemente zur mechanischen Verriegelung der rohrförmigen Elementen miteinander und auch zum Definieren von inneren Aufnahmen für Dichtungsmaterial (47), die sich entlang der Verbindungselemente erstrecken, aufweist, **dadurch gekennzeichnet,** daß das Verfahren zudem die folgenden Schritte aufweist:
- gegenseitiges Verrasten der rohrförmigen Elemente (45) um die Rohre des primären Leitungssystems (13) herum mit Hilfe der Verbindungselemente; und
- Einspritzen eines haftfähigen Dichtungsmaterials (27) in fließfähiger Form in die inneren Aufnahmen für das Dichtungsmaterial (47), um letztere zu füllen und haftende, dichte Verbindungen zwischen den rohrförmigen Elementen (45) herzustellen.

22. Verfahren nach Anspruch 21, **dadurch gekennzeichnet,** daß der Schritt des Einspritzens das Einspritzen des haftfähigen Dichtungsmaterials (27) in die Zwischenräume und um die Verbindungselemente (48 - 49 oder 61 - 62) herum, um die Anordnung der rohrförmigen Elemente (45) zu fixieren, umfaßt.

23. Verfahren zur Kontrolle der Bildung einer dichten Verbindung in den Dichtungsaufnahmen, die wenigstens zwischen zwei rohrförmigen Elementen (45) oder einem sekundären Mantelrohr (15) und einem sekundären Anschlußstück (14) ausgespart sind und miteinander durch ein haftfähiges Dichtungsmaterial verbunden sind, entsprechend den Ansprüchen 1 bis 18, **dadurch gekennzeichnet,** daß die Rohr- oder Verbindungselemente aus. einem durchscheinenden oder durchsichtigen Material hergestellt sind und daß das haftfähige Dichtungsmaterial aus einem farblich kontrastierenden und fließfähigen Material hergestellt ist **und dadurch,** daß der Fluß des haftfähigen Dichtungsmaterials in den Dichtungsaufnahmen beobachtet und kontrolliert wird, um zu gewährleisten, daß sich eine vollständige, ununterbrochene und dichte Verbindung bildet.

## Claims

1. Double-wall system for a water containment, intended especially for preventing escape of the fluids carried by a primary drain, which comprises:
- primary drain pipes (13), connected by at least one primary coupling (12);
- secondary containment pipes (15), divided longitudinally into a plurality of elongate tubular elements (45), disposed on either side of one or more separation planes, assembled around the primary drain pipes (13) and connected together by a secondary coupling system (14), composed of two coupling pieces (17, 18) designed to be fitted around the primary coupling (12) and connected to each other by edge-to-edge assembly defining tubular sockets (19) receiving the ends of the secondary containment pipes;
- passages for sealing material (23, 24, 25) provided between the contact surfaces of the two coupling pieces (17, 18) in said assembled coupling, which are filled with an adhesive sealing material (27) for fixing and sealing together said coupling pieces and;
- a sealing channel (28), provided in the inner wall of each socket (19), this channel leading into sealing passages (23, 24, 25) surrounding the end of a secondary containment pipe (15) and which are filled with said adhesive sealing material in such a manner that this material forms an uninterrupted, continuous seal entirely surrounding the internal space formed in the coupling system (14) and thus completing the coupling-pipe junction.

2. System according to Claim 1, characterized in that said pieces (17, 18) of the secondary coupling system (14) are provided with lateral projecting flanges (20, 21, 22), in order to increase the contact surfaces of the two pices of the coupling, said flanges being provided with grooves (23, 24, 25) enclosed between said contact surfaces and constituting said passages filled with said adhesive sealing material (27).

3. System according to Claim 2, characterized in that said grooves (23, 24, 25) are surrounded by opposite plane surfaces, with the exception of the entry openings (30) into said sealing channels (28), these plane surfaces comprising cooperating elements (31 - 32), facing one another laterally and creating complementary contact surfaces.

4. System according to any one of the preceding Claims, characterized in that means are provided for assuring the fixing, one into the other, of said pieces (17, 18) of the secondary coupling system (14), before the application of the adhesive sealing material.

5. System according to Claim 4, characterized in that said fixing means are constituted of grips, notably of the clips type (29).

6. System according to any one of the preceding Claims, characterized in that it comprises an overflow volume along outer edges of said sealing passages (23, 24, 25).

7. System according to any one of the preceding Claims, characterized in that said overflow volume is formed by ducts (33) leading into "wells", disposed along the outer edges of said grooves (23, 24, 25) for allowing discharge of the adhesive sealing material.

8. System according to any one of the preceding Claims, characterized in that it comprises channels (34) formed on either side of said sealing channels (28), in order to assure a flow of the adhesive sealing material beyond said sealing channels (28) towards the opposite ends of the sockets (19).

9. System according to any one of the preceding Claims, characterized in that orifices (41) formed in said sockets permit injection of the adhesive sealing material.

10. System according to any one of the preceding Claims, characterized in that said adhesive sealing material is an adhesive for plastics pipes, notably a thermosetting adhesive.

11. System according to one of the preceding Claims, characterized in that said tubular elements (45) are provided with connecting means along their contact edges, on the one hand for assuring their mechanical interlocking and on the other hand for defining sealing passages (47) extending longitudinally along said connecting means and which are filled with an adhesive sealing material assuring the fixing and bonding together of said tubular elements.

12. System according to Claim 11, characterized in that said connecting means comprise tongue-and-groove assembly elements (48, 49), engaging elastically together along the lateral contact edges of the couplings, and internal fins (50) integral with the internal surfaces of said tubular elements (45), said fins being separated from the internal surfaces of said tubular elements along the longitudinal contact edges in order to define said passages for the sealing material (47).

13. System according to Claim 12, characterized in that said tongue (48) of the assembly elements disposed on one edge of each tubular element (45) has a portion with widened free edge and in that said groove (49), disposed in the contact edge of the other tubular element (45), is profiled and positioned in such a manner as to receive said tongue with elastic locking.

14. System according to one of Claims 12 or 13, characterized in that said internal fins (50) are formed along the same lateral edges of the tubular elements as said grooves (49), and are offset inwards from said lateral edges, and comprise a free edge (52) which is profiled as a beading curved on the outer side of said fin.

15. System according to Claim 14, characterized in that means are provided for applying said beadings (52) in sealing manner against the surface of the tubular element (45).

16. System according to Claim 15, characterized in that said means consist of an internal tongue (53) having an L-shaped cross-section, defining an internal overhang (54) open towards the adjacent edge of said tubular element (45) and which is positioned for receiving the free edge (52) of said fins (50) during the assembling together by pressing of said tubular elements.

17. System according to any one of the preceding Claims, characterized in that the tubular elements (60) of the secondary containment pipes are connected by their contact edges by means of tongue-and-groove assembly elements (61, 62) held by locking, said groove (62) having a widened-out lower part defining a passage for sealing material (63), said groove and said passage being filled with an adhesive sealing material, holding and bonding together said contact edges.

18. System according to any one of the preceding Claims, characterized in that the secondary containment pipe (60) is reinforced by means of a reinforcing strip (67) fixed to the outer faces of said tubular elements over the longitudinal joint between the contact edges.

19. Method of forming a double-wall containment system according to Claims 1 to 18 around a primary drain system comprising a primary coupling system connecting together at least two primary drain pipes, characterized in that it comprises the following operations:
- providing a coupling (14) for longitudinally divided secondary containment pipes, comprising two coupling pieces (17, 18) designed in such a way as to be assembled in edge-to-edge position around the primary coupling (12), and possessing at least two tubular sockets (19) for receiving secondary containment pipes (15);
- defining first internal passages for sealing material (23, 24, 25) between the assembled edges of said secondary coupling pieces;
- positioning, by means of spacer pieces (57), the tubular elements (45) forming a secondary containment pipe (15) around the primary drain pipes (13) and locking them to each other;
- positioning the secondary coupling pieces (17, 18) around the primary coupling (12) and the secondary containment pipes (15) around the primary drain pipes (23), and tightening the coupling pieces against each other;
- defining second internal passages for sealing material (28) around the secondary containment pipes (15) fitted tightly into the sockets;
- injecting an adhesive sealing material (27) in fluid form into the first and second internal sealing passages for filling them and forming tight adhesive seals between the coupled edges and around each tubular socket and;
- keeping the secondary coupling pieces (17, 18) clamped by means of mechanical devices at least until said adhesive sealing material (27) has hardened.

20. Method according to Claim 19, characterized in that, after the operation of forming said first and second internal sealing passages, these communicate with one another to form a continuous passage and a bonding device, and in that the operation of sealing injection of said sealing material is carried out both in the first and in the second passages for sealing material substantially at the same time.

21. Method according to one of Claims 19 or 20, comprising longitudinally divided secondary containment pipes (15), each composed of a plurality of tubular elements (45) capable of being assembled edge-to-edge around a primary drain pipe (13) and comprising connecting means along their contact edges for mechanically locking together said tubular elements and also for defining internal passages (47) for sealing material extending along the connecting means, characterized in that it comprises, in addition, the following operations:
- locking the tubular elements (45) to one another around the primary drain pipes (13) by said connecting means and;
- injecting an adhesive sealing material (27) in fluid form into said internal passages for sealing material (47) for filling them, and forming tight adhesive seals between the tubular elements (45).

22. Method according to Claim 21, characterized in that the injection operation comprises the injection of the adhesive sealing material (27) into the clearances and around the connecting means (48, 49 or 61, 62) for fixing the assembly of tubular elements (45).

23. Method of monitoring the forming of a leak-tight seal in the sealing passages formed between at least two tubular elements (45) or a secondary containment pipe (15) and a secondary coupling (14), fixed together by an adhesive sealing material according to Claims 1 to 18, characterized in that said tubular elements or couplings are formed of a translucent or transparent material and said adhesive sealing material of a fluid material of contrasting colour, and in that the flow of said adhesive sealing material in said sealing passages is observed and monitored to ensure that a complete, continuous and leak-tight seal is formed.
